# EUROPEAN PATENT APPLICATION

(11) **EP 2 012 025 A1**
(43) Date of publication of application: **07.01.2009**
(21) Application number: 07742313.5
(22) Date of filing: 24.04.2007
(51) Int. Cl.: F16B 7/14, B62D 1/18, B62D 1/19, F16D 7/02

(54) **FASTENING TOOL, AND STEERING DEVICE**

(30) Priority: 27.04.2006 JP 2006122827; 24.07.2006 JP 2006200907
(71) Applicant: NSK Ltd., Tokyo 141-8560 (JP)
(72) Inventor: OKADA, Jun c/o NSK Ltd.,, Gunma 371-8528 (JP); ARAMAKI, Hirotoshi NSK Ltd.,, Gunma 371-8528 (JP)
(74) Representative: Grünecker, Kinkeldey, Stockmair & Schwanhäusser Anwaltssozietät
(86) International application number: PCT/JP2007/058878
(87) International publication number: WO 2007/125928

(57) **Abstract**

A fastener (1) for joining together two members (5, 6) includes a ring main body (3), a plurality of projecting portions (4) which are provided on the ring main body in a circumferential direction at intervals, and a plurality of recessed portions (10) which are provided on the projecting portions, whereby when the two members move relative to each other, a stable frictional resisting force can be imparted.

## Description

### Technical Field

The present invention relates to a fastener for joining together a plurality of mechanical elements. In particular, the invention relates a fastener for use for an energy absorbing mechanism (EA mechanism) of a steering apparatus.

### Background Art

Conventionally, a tolerance ring is used in a torque limiter mechanism of an electric power steering apparatus (for example, refer to Patent Document No. 1). The electric power steering apparatus detects a steering wheel torque produced by turning a steering wheel is detected and drives a steering assist motor according to the steering wheel torque so detected. The rotational force of the steering assist motor is transmitted to a steering shaft via a worm and a worm wheel. A torque limiter is provided between the steering shaft and the worm wheel. The torque limiter mechanism is provided to prevent the failure of the steering assist motor by an excessive torque being applied to the steering shaft, for example, when a wheel rides on a curb. The torque limiter mechanism has a tolerance ring.

Fig. 17 is a front view of a conventional tolerance ring 201. Fig. 18 is a sectional view of the tolerance ring 201 taken along the line XVIII-XVIII in Fig. 17.
The tolerance ring 201 is such that a plurality of projecting portions 204, which project radially outwards and extend axially, are formed integrally on a metallic ring main body 203 having a split groove in a circumferential direct at regular intervals.

Fig. 19 is a cross-sectional view of the conventional tolerance ring 201 which is mounted between a steering shaft 205 and a worm wheel 206. Fig. 20 is a longitudinal sectional view of the conventional tolerance ring 201 which is mounted between the steering shaft 205 and the worm wheel 206.

An inner circumference of the tolerance ring 201 is fitted on an outer circumference of the steering shaft 205, and an inner circumference of the worm wheel 206 if fitted on an outer circumference of the tolerance ring 201. By applying a radial force which corresponds to a radial deformation amount of the tolerance ring 201 to the steering shaft 205 and the worm wheel 206, a frictional resistance between the inner circumference of the tolerance ring 201 and the outer circumference of the steering shaft 205 and a frictional resistance between the outer circumference of the tolerance ring 201 and the inner circumference of the worm wheel are produced. Owing to these frictional resistances, torque can be transmitted between the steering shaft 205 and the worm wheel 206 and a limit torque is set so as to correspond to the frictional resistances, whereby the function as the torque limiter mechanism is fulfilled.

In the conventional technique that has been described above, in order to stabilize load, grease is applied between the tolerance ring 201 and the steering shaft 205 and the worm wheel 206. This grease is also held in spaces 207 which extend axially between projecting portions 204 of the tolerance ring 201. When the steering shaft 205 and the worm wheel 206 rotate relatively, since the rotating direction and the direction in which the spaces 207 holding the grease therein extend intersect each other at right angles, the grease held in the spaces 207 is supplied to contact surfaces between the projecting portions 204 of the tolerance ring 201 and the steering shaft 205 and the worm wheel 206, whereby load is stabilized.

In addition, a tolerance ring is used in an energy absorbing mechanism for an automotive steering shaft (for example, refer to Patent Document No. 2). The energy absorbing mechanism is such as to allow the steering shaft to be shortened axially when a motor vehicle is brought into collision with an obstacle. The energy absorbing mechanism is made up of an inner metal tube and an outer metal tube. Both the metal tubes are fitted in or on each other at one end portions thereof in a telescopic fashion. A tolerance ring is disposed between the one end portions of both the metal tubes. The tolerance ring has a wavy cross-sectional profile as sectioned in a radial direction. When mounted between both the metal tubes with a plurality of projecting portions which are provided in a circumferential direction so as to extend in an axial direction brought into press contact with both the metal tubes, the tolerance ring produces a force in a radial direction, and load is made to be produced when both the metal tubes move relatively in the axial direction. By adopting a configuration like this, when a motor vehicle is brought into collision with an obstacle, the tolerance ring allows both the metal tubes to slide relative to each other while producing a load in the axial direction, so as to allow the steering shaft to be shortened in the axial direction.

Patent Document No. 1: JP-A-09-020256
Patent Document No. 2: JP-A-09-002293

### Disclosure of the Invention

### Problem that the Invention is to Solve

Even when the tolerance ring is used in the conventional energy absorbing mechanism, in order to stabilize load, grease is applied between the tolerance ring and the metal tubes. However, the grease so applied at the time of assembly is scraped out from the contact surfaces between the projecting portions of the tolerance ring and both the metal tubes when the metal tubes are moved axially relative to each other. Here, the grease is also held in the spaces which extend in the axial direction between the projecting portions of the tolerance ring. However, since the direction in which the spaces extend and the direction in which both the metal tubes are moved relative to each other are parallel, the grease in the spaces is not supplied to the contact surfaces of the projecting portions and the metal tubes. As a result, the lubricated state of the contact faces becomes unstable, the load is not stabilized and there may emerge a situation where a stick slip is produced.

The invention has been made in view of the situations, and an object thereof is to a fastener which can stabilize load that is produced when two members move axially with respect to each other and prevent a stick slip and a steering apparatus which is provided with the fastener.

### Means for Solving the Problem

With a view to solving the problem described above, according to the invention, the following configurations are provided.
(1) A fastener for joining together two members including:
   a ring main body;
   a plurality of projecting portions provided on the ring main body in a circumferential direction thereof at intervals; and
   a recessed portion provided on the projecting portions.
(2) The fastener as set forth in (1), wherein
   the fastener is mounted between the two members in such a state that the fastener is brought into press contact therewith so as to join the two members coaxially and
   the fastener functions as a load limiting mechanism for producing a predetermined load when the two members are moved in an axial direction relative to each other.
(3) The fastener as set forth in (1), wherein
   the plurality of projections extend along an axial direction of the ring main body, and
   a split groove is provided in the ring main body.
(4) The fastener as set forth in (1), wherein
   a circumferential edge of the recessed portion defines a contact portion which is brought into contact with one of the two members.
(5) A steering apparatus including:
   an energy absorbing mechanism for absorbing impact energy,
   wherein the fastener as set forth in () 1 is used for the energy absorbing mechanism.
(6) An electric telescopic adjustment steering apparatus including:
   a steering column having an outer column and an inner column which are connected so as to extend and contract freely and adapted to support rotatably a steering shaft on which a steering wheel is mounted; and
   an electric actuator mounted on the outer column at one end portion and on the inner column at the other end portion, so as to allow the extension and contraction of the outer column and the inner column, wherein
   the electric actuator includes:
      the fastener as set forth in (1); and
      a contracting portion adapted to absorb impact energy while producing load in an axial direction by contracting when impact load is inputted.
(7) The electric telescopic adjustment steering apparatus as set forth in (6), wherein
   the electric actuator includes a rod provided in parallel with a center axis of the inner column with a predetermined offset amount held therebetween and adapted to be driven by an electric motor.
(8) The electric telescopic adjustment steering apparatus as set forth in (7), wherein
   the rod includes:
   an inner rod which makes up one of the two members;
   an outer rod making up the other of the two members into which the inner rod is inserted via a predetermined gap so as to move relatively; and
   the fastener fittingly inserted in the gap between the inner rod and the outer rod so as to permit the extension or contraction of the inner rod and the outer rod while imparting a predetermined load when a secondary impact load is applied.
(9) The electric telescopic adjustment steering apparatus as set forth in (7), wherein
   one end of the rod is screwed to an female screw formed on an inner circumferential surface of a worm wheel of a worm speed reduction mechanism connected to the electric motor and
   the other end of the rod is fittingly inserted into a connecting member fixed to either of the outer column and the inner column so as to move relatively while imparting a predetermined load when a secondary impact load is applied.
(10) An electric telescopic adjustment steering apparatus including:
   a steering column including an outer column and an inner column which are connected so as to extend and contract freely and adapted to support rotatably a steering shaft on which a steering wheel is mounted; and
   an electric actuator mounted on the outer column at one end portion and on the inner column at the other end portion, so as to allow the extension and contraction of the outer column and the inner column, wherein
   the electric actuator has a contracting portion adapted to absorb impact energy by contracting while producing load in an axial direction when impact load is inputted, and
   a coating of solid lubricant is formed on the contracting portion of the electric actuator.
(11) The electric telescopic adjustment steering apparatus as set forth in (10), wherein
   the electric actuator includes:
   a rod provided in parallel with a center axis of the inner column with a predetermined offset amount held therebetween and adapted to be driven by an electric motor.
(12) The electric telescopic adjustment steering apparatus as set forth in (11), wherein
   the rod includes:
   an inner rod;
   an outer rod into which the inner rod is inserted via a predetermined gap so as to move relatively; and
   an energy absorbing member fittingly inserted in the gap between the inner rod and the outer rod and having wavy irregularities on an inner circumferential surface thereof so as to permit the extension or contraction of the inner rod and the outer rod while imparting a predetermined load when a secondary impact load is applied, and
   wherein a film of solid lubricant is formed on a sliding surface of at least one of the inner rod and the outer rod. (13) The electric telescopic adjustment steering apparatus as set forth in (11), wherein
   one end of the rod is screwed to an female screw formed on an inner circumferential surface of a worm wheel of a worm speed reduction mechanism connected to the electric motor,
   the other end of the rod is fittingly inserted into a connecting member fixed to either of the outer column and the inner column so as to move relatively while imparting a predetermined load when a secondary impact load is applied, and
   a film of solid lubricant is formed on a slide contact portion with the connecting member of the rod.

### Advantage of the Invention

According to the fastener of the invention, it includes the ring main body, the plurality of projecting portions provided on the ring main body in the circumferential direction at the intervals and the recessed portions which are provided on the projecting portions, grease can be held in the recessed portions. Thus, the grease is prevented from being scraped out when the two members move axially relative to each other so as to stabilize the load produced, thereby making it possible to prevent a stick slip.
In addition, according to the steering apparatus of the invention, since the fastener is used for the energy absorbing mechanism or the contracting portion which absorbs impact energy, a stable energy absorbing load can be produced at the time of collision.

### Brief Description of the Drawings

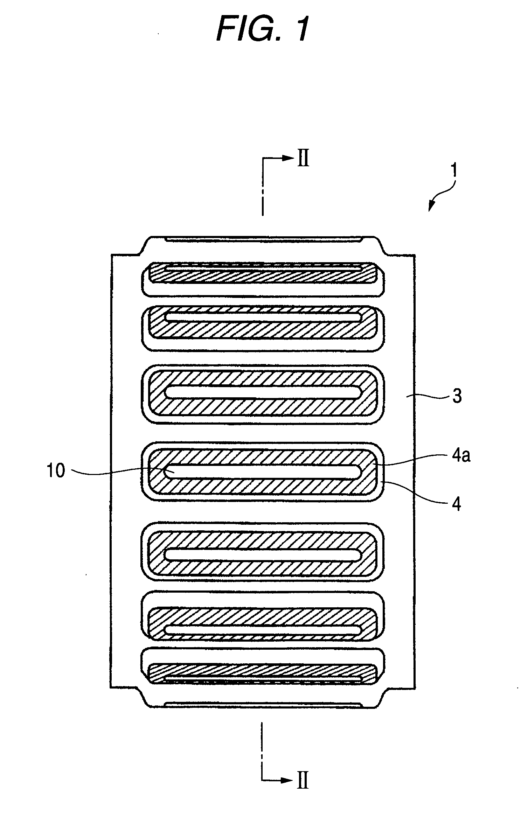

[Fig. 1] Fig. 1 is a front view of a fastener of the invention.

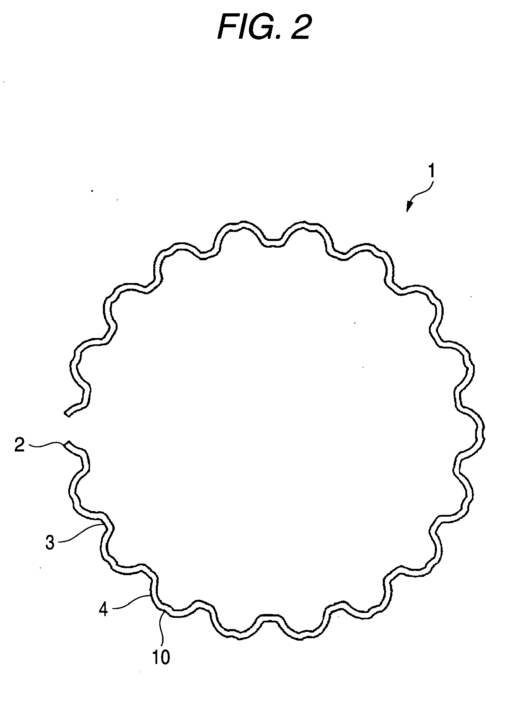

[Fig. 2] Fig. 2 is a sectional view of the fastener taken along the line II-II in Fig. 1.

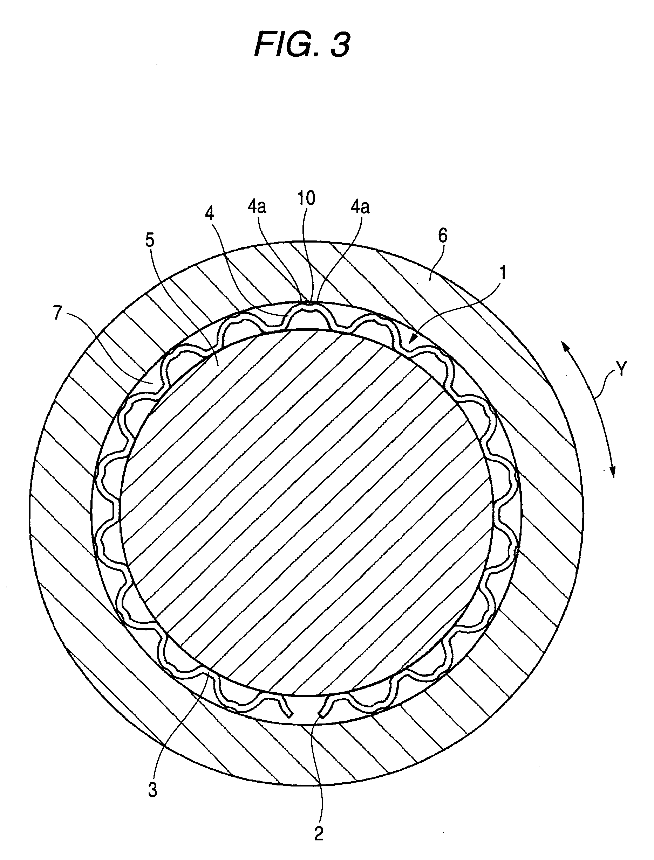

[Fig. 3] Fig. 3 is a cross-sectional view of the fastener of the invention which is mounted between a shaft member and a hollow cylindrical member.

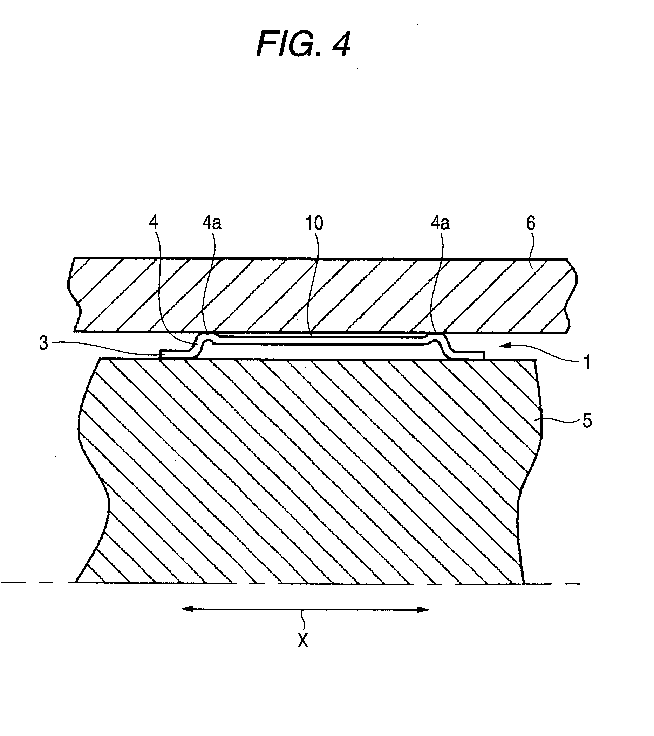

[Fig. 4] Fig. 4 is a longitudinal sectional view of the fastener of the invention mounted between the shaft member and the hollow cylindrical member.

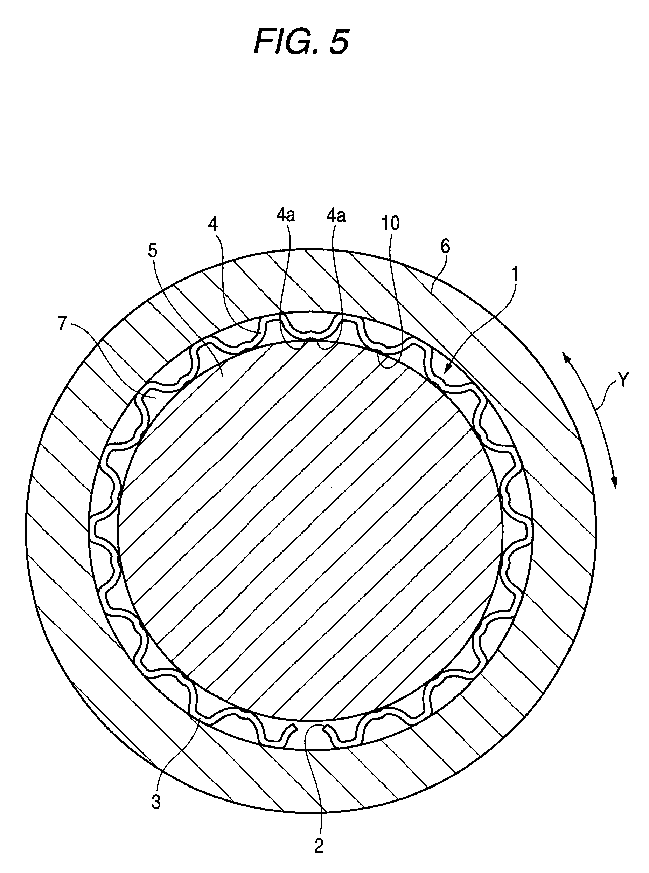

[Fig. 5] Fig. 5 is a cross-sectional view of a fastener according to a second embodiment of the invention which is mounted between a shaft member and a hollow cylindrical member.

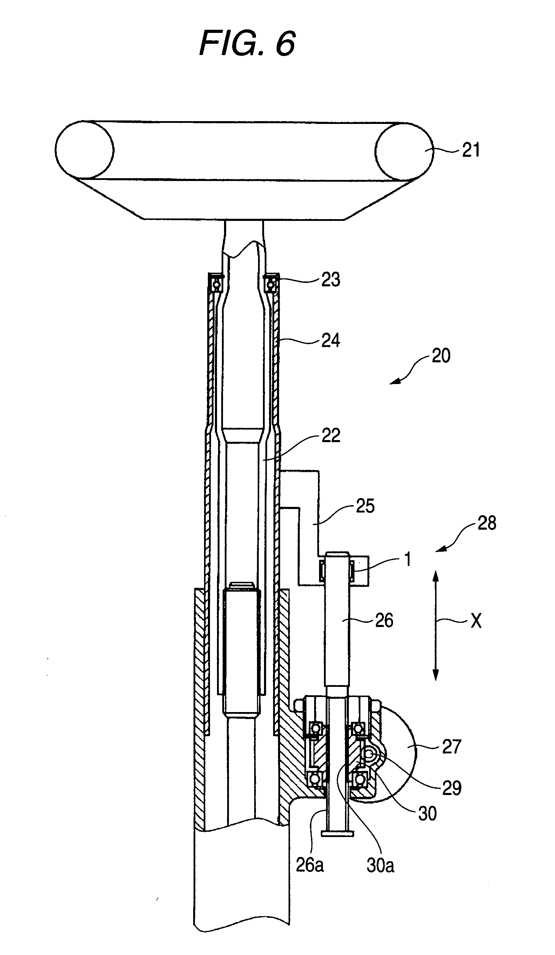

[Fig. 6] Fig. 6 is a diagram showing an electric telescopic column which utilizes the fastener according to the invention.

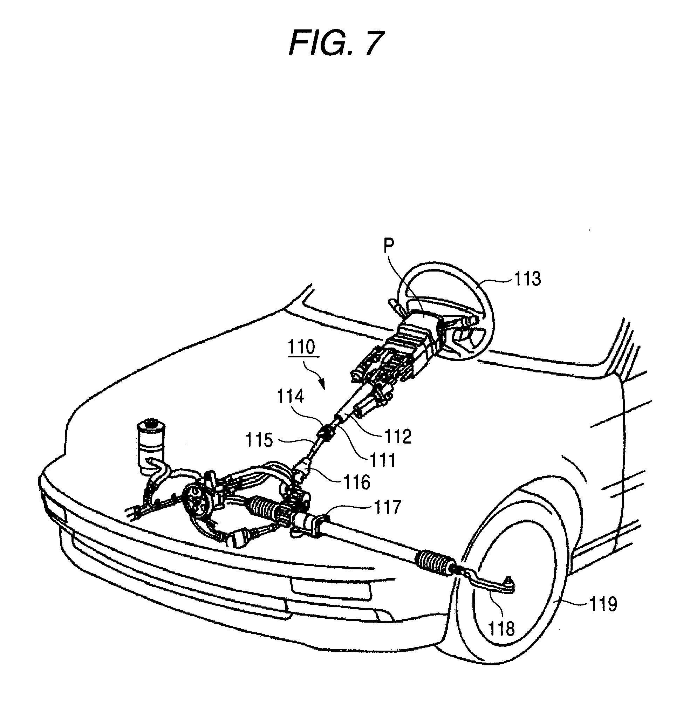

[Fig. 7] Fig. 7 is a diagram showing an overall configuration showing a state in which a steering apparatus according to the invention is equipped on a vehicle.

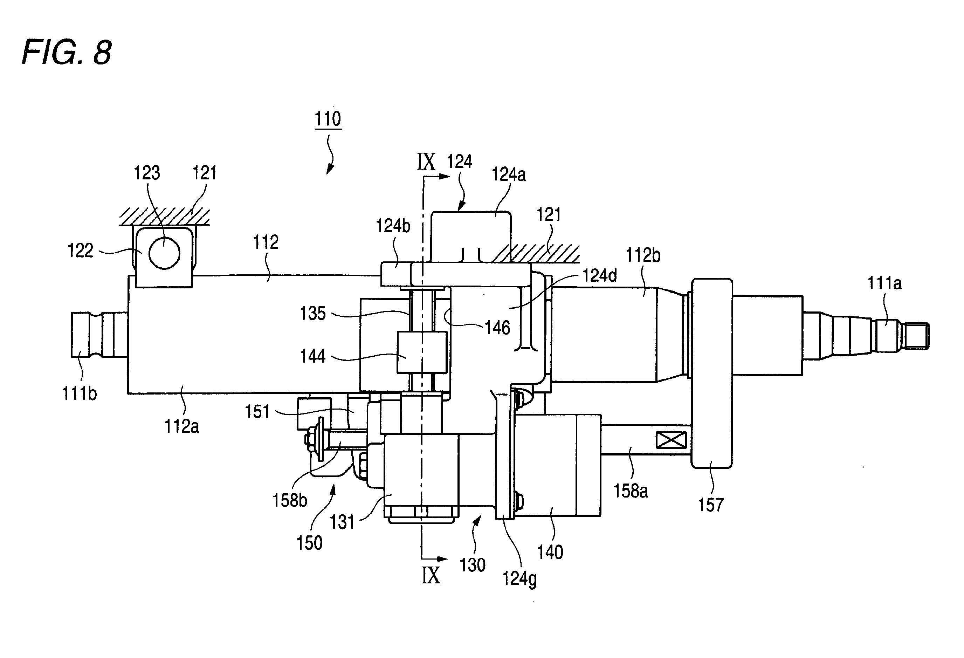

[Fig. 8] Fig. 8 is a side view of a steering column apparatus which excludes a steering wheel.

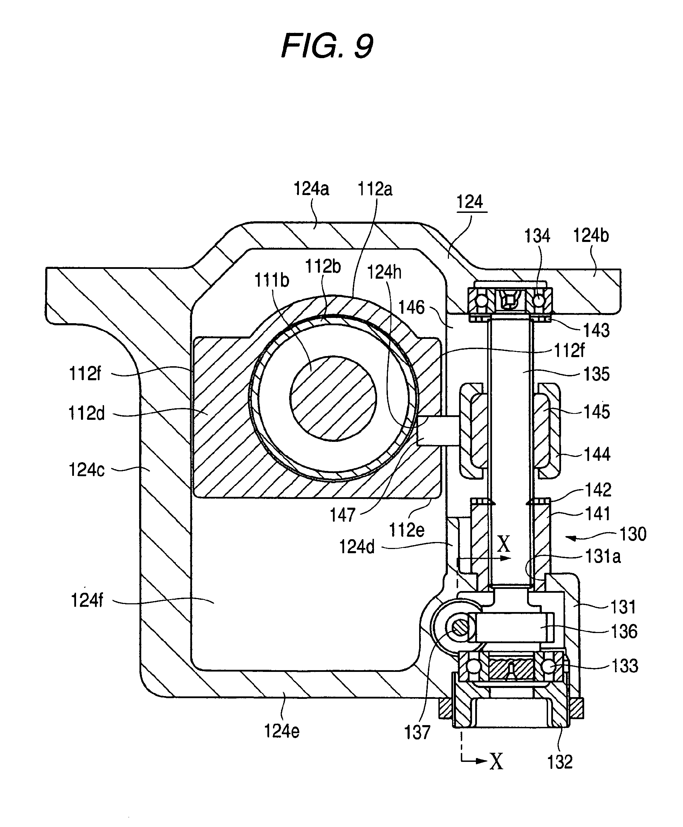

[Fig. 9] Fig. 9 is a sectional view taken along the line IX-IX in Fig. 8.

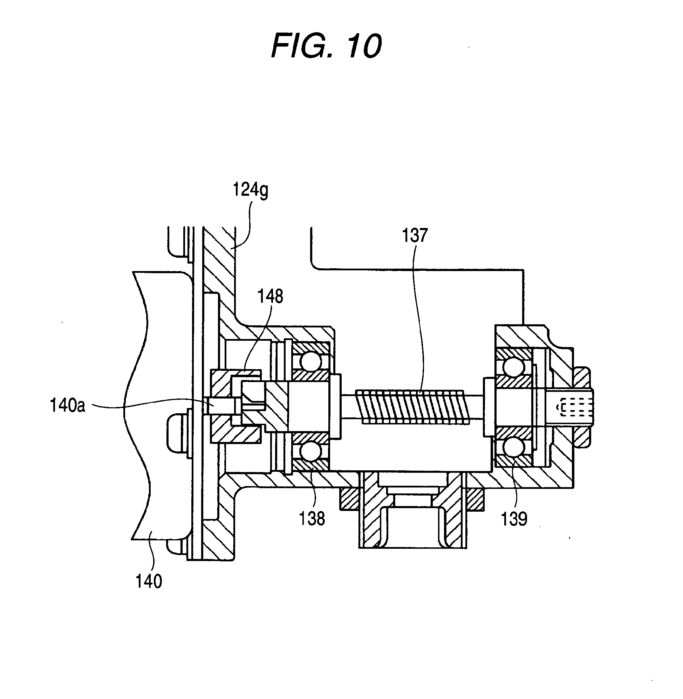

[Fig. 10] Fig. 10 is a sectional view taken along the line X-X in Fig. 9.

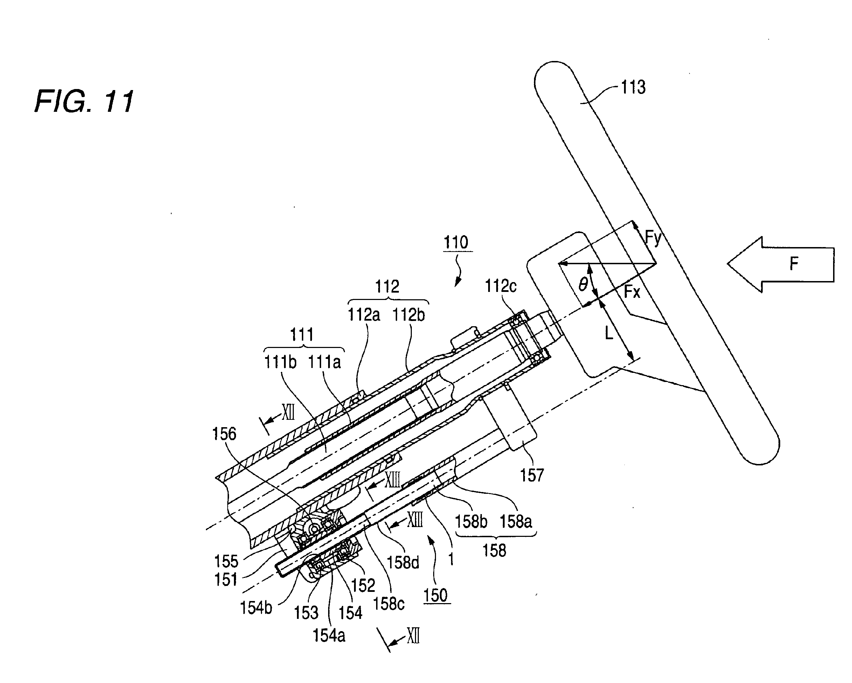

[Fig. 11] Fig. 11 is a longitudinal sectional view of a main part of the steering column apparatus.

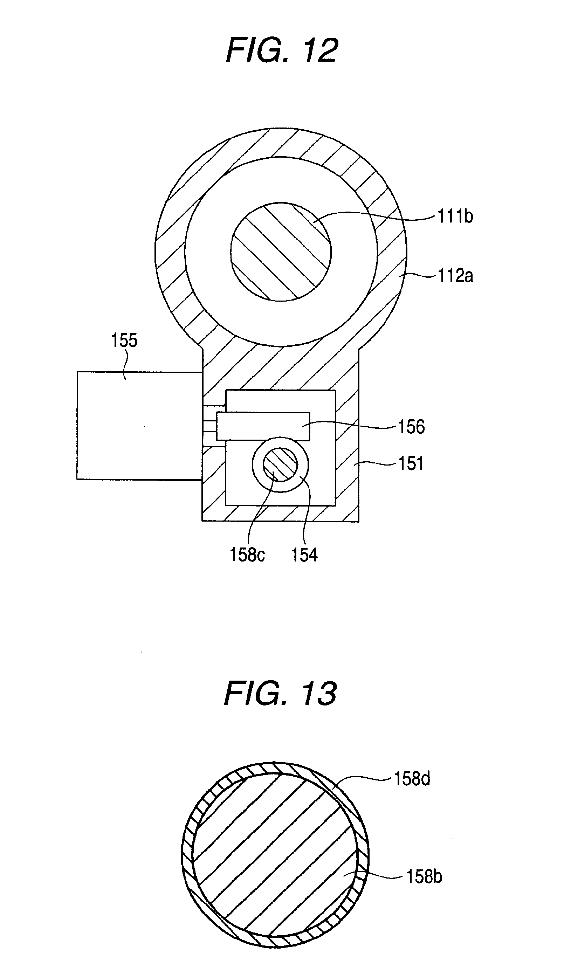

[Fig. 12] Fig. 12 is a sectional view taken along the line XII-XII in Fig. 11.
[Fig. 13] Fig. 13 is a sectional view taken along the line XIII-XIII in Fig. 11.

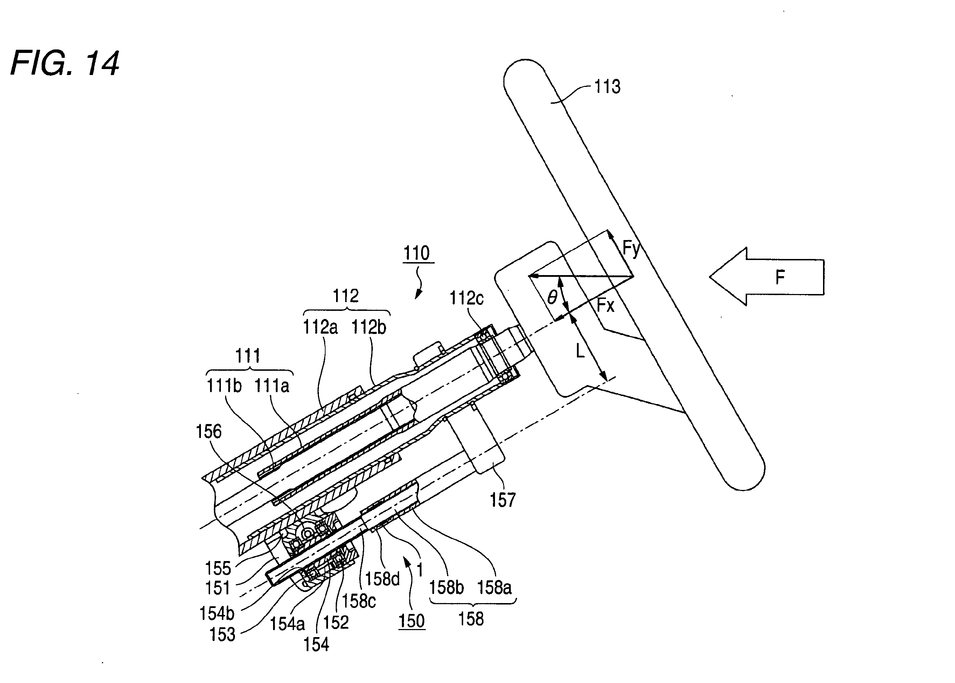

[Fig. 14] Fig. 14 is a longitudinal sectional view similar to Fig. 11, which shows a state resulting when the steering column apparatus contracts.

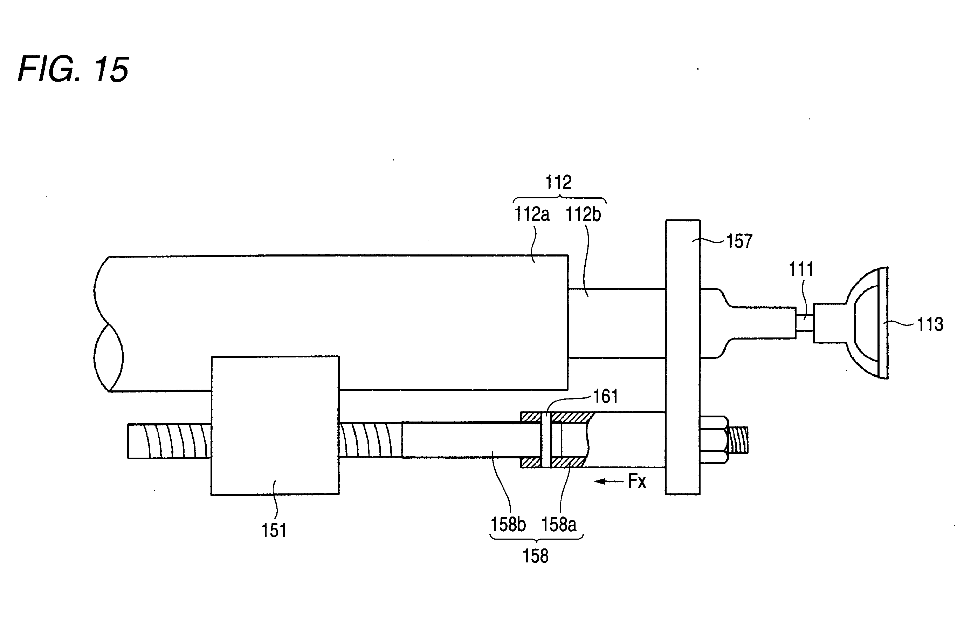

[Fig. 15] Fig. 15 is a side view showing another embodiment of the invention with a main part thereof shown as sectioned.

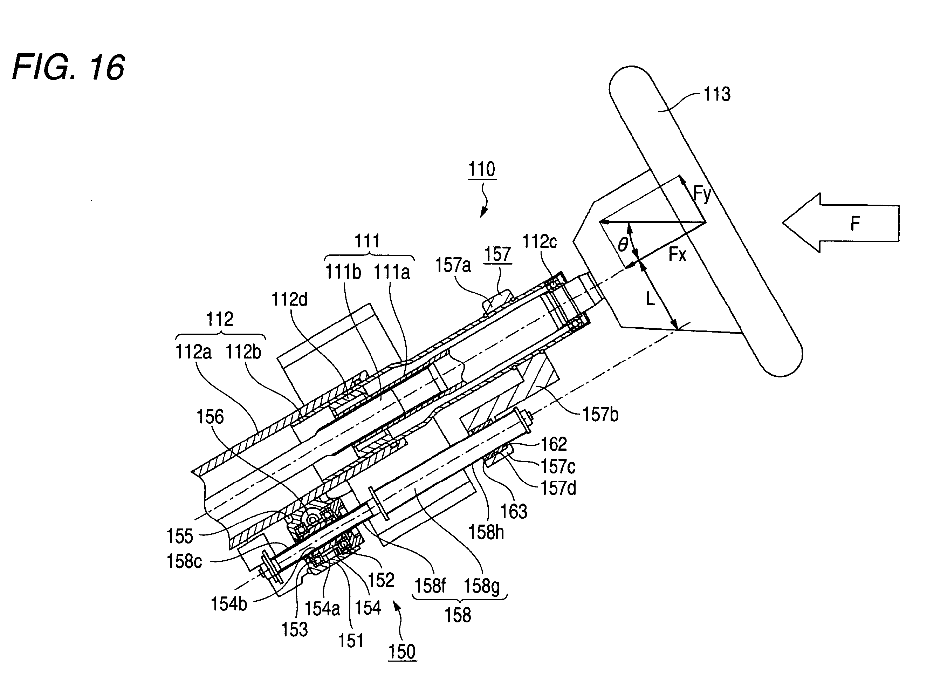

[Fig. 16] Fig. 16 is a longitudinal sectional view showing a further embodiment of the invention.

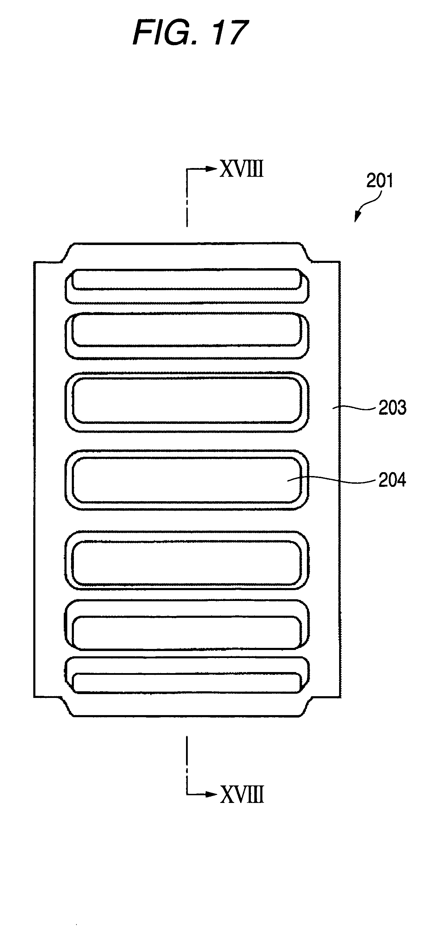

[Fig. 17] Fig. 17 is a front view of a conventional tolerance ring.

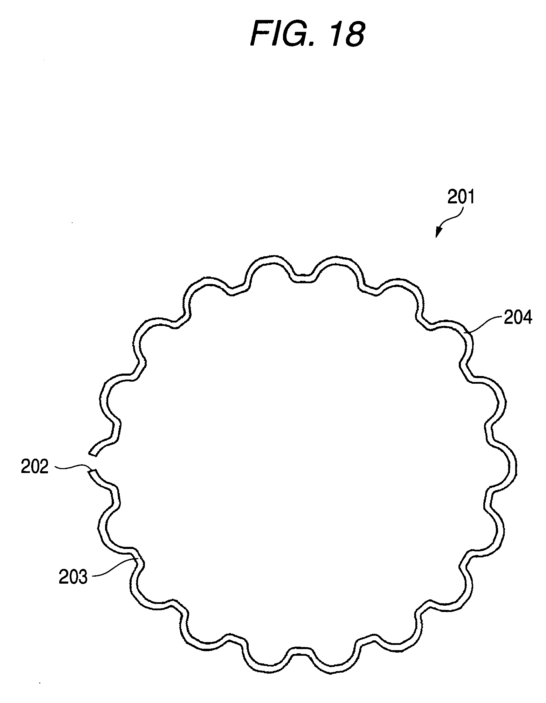

[Fig. 18] Fig. 18 is a sectional view of the tolerance ring taken along the line XVIII-XVIII in Fig. 17.

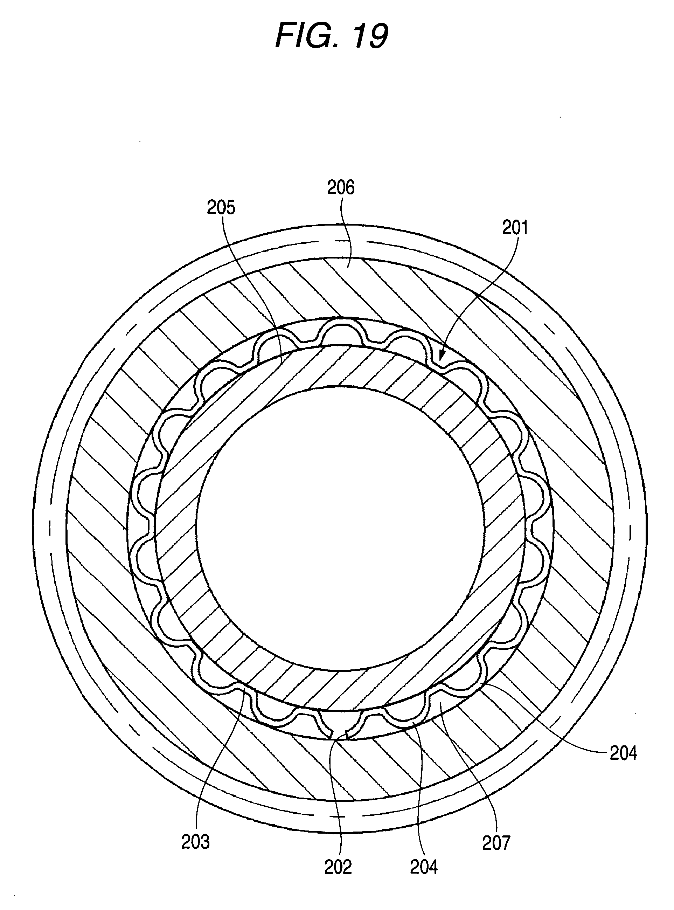

[Fig. 19] Fig. 19 is a cross-sectional view of the tolerance ring which is mounted between a steering shaft and a worm wheel.

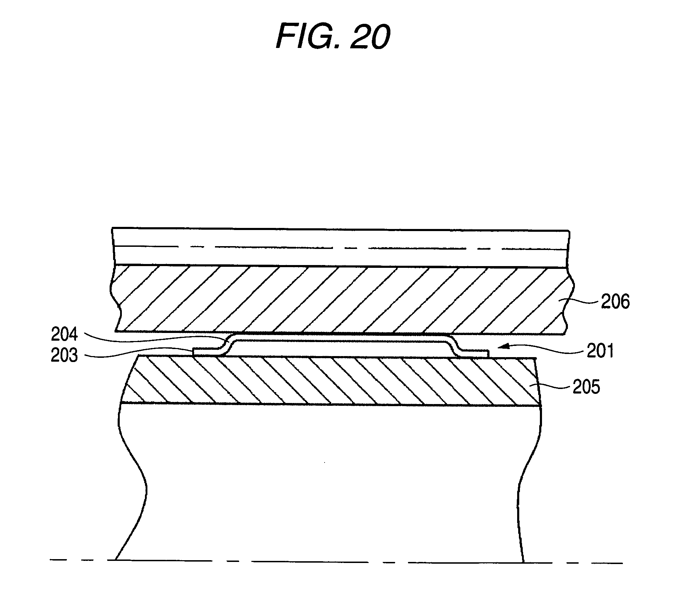

[Fig. 20] Fig. 20 is a longitudinal sectional view of the conventional tolerance ring which is mounted between the steering shaft and the worm wheel.

### Description of Reference Numerals and Characters

1, 162 fastener; 2 split groove; 3 metallic ring main body; 4 projecting portion; 4a circumferential edge; 5 shaft member; 6 hollow cylindrical member; 7 space; 10 recessed portion; 20 electric telescopic column; 21, 113 steering wheel; 22, 111 steering shaft; 23 bearing; 24, 112 steering column; 25 supporting body; 26 drive shaft; 26a male screw portion; 27, 155 electric motor; 28 energy absorbing mechanism; 29, 156 worm; 30, 154 worm wheel; 30a female screw portion; 110 steering column apparatus; 111a outer shaft; 111b inner shaft; 112a outer column; 112b inner column; 114, 116 universal joint; 115 intermediate shaft; 117 steering gear; 118 tie rod; 119 steered wheel; 121 vehicle body side member; 122 lower bracket; 124 upper bracket; 130 tilt mechanism; 150 telescopic mechanism; 151 gear housing; 157 connecting plate; 158 connecting rod; 158a outer rod; 158b inner rod; 158d, 158h solid lubricant film; 158f small-diameter rod portion; 158g large-diameter rod portion; 161 pin; X relative moving direction; Y relative rotating direction

### Best Mode for Carrying out the Invention

Hereinafter, the invention will be described based on preferred embodiments by reference to the drawings. However, dimensions, materials, shapes and relative positions of constituent components which will be described in embodiments below are not such as to limit the scope of the invention only thereto unless otherwise described specifically.

### (First Embodiment)

Fig. 1 is a front view of a fastener 1 according to the invention. Fig. 2 is a sectional view of the fastener 1 taken along the line II-II in Fig. 1.
The fastener 1 is such that a plurality of projecting portions 4, which project radially outwards and extend axially, are formed integrally on a metallic ring main body 3 having a split groove 2 in a circumferential direction at regular intervals. A recessed portion 10 is provided on a top portion of the projecting portion 4 so as to extend axially. The recessed portion 10 is surrounded by a circumferential edge 4a.

Fig. 3 is a cross-sectional view of the fastener 1 according to the invention which is mounted between a shaft member 5 and a hollow cylindrical member 6. Fig. 4 is a longitudinal sectional view of the fastener 1 which is mounted between the shaft member 5 and the hollow cylindrical member 6.

When the fastener 1 is mounted between the shaft member 5 and the hollow cylindrical member 6, grease is applied to the recessed portions 10 provided on the projecting portions 4. An inner circumference of the fastener 1 is fitted on an outer circumference of the shaft member 5, and an inner circumference of the hollow cylindrical member 6 is fitted on an outer circumference of the fastener 1. As this occurs, the fastener 1 is elastically deformed in a radial direction, so that a radial force corresponding to a deformation amount is made to act on the shaft member 5 and the hollow cylindrical member 6. By this configuration, a frictional resisting force is produced between the inner circumference of the fastener 1 and the outer circumference of the shaft member 5, and a frictional resisting force is produced between the outer circumference of the fastener 1 and the inner circumference of the hollow cylindrical member 6. The shaft member 5 and the hollow cylindrical member 6 are fixed to the fastener 1 by virtue of these frictional resisting forces.

On the other hand, when an external force which is larger than these frictional resisting forces is applied to the shaft member 5 and the hollow cylindrical member 6, depending upon the direction of the external force, the shaft member 5 and the hollow cylindrical member 6 rotate relative to each other in directions indicated by arrows Y shown in Fig. 3 or move relative to each other in directions indicated by arrows X shown in Fig. 4. Namely, the fastener 1 functions as a torque limiting mechanism or a load limiting mechanism.

The recessed portion 10 constitutes a closed space by the circumferential edge 4a of the recessed portion 10 being tightly secured to the inner circumference of the hollow cylindrical member 6, thereby a holding effect of grease is enhanced. Fig. 1 shows contact surfaces of the circumferential edges 4a which are adapted to be brought into contact with the inner circumference of the hollow cylindrical member 6 as being hatched. The circumferential edge 4a may be brought into line contact with the inner circumference of the hollow cylindrical member 6. In addition, the circumferential edge 4a is not necessarily contact directly the inner circumference of the hollow cylindrical member 6 and hence, a tightly sticking portion which tightly sticks to the inner circumference of the hollow cylindrical member 6 may be provided on a circumferential edge portion which has the circumferential edge 4a.

When the shaft member 5 and the hollow cylindrical member 6 move relative to each other in the directions indicated by the arrows X in Fig. 4, the grease held in the recessed portions 10 is supplied to contact surfaces (the circumferential edges 4a).
Alternatively, also when the shaft member 5 and the hollow cylindrical member 6 rotate relative to each other in the directions indicated by the arrows Y in Fig. 3, the grease held in the recessed portions 10 is supplied to the contact surfaces (the circumferential edges 4a).
By the supply of the grease like this, the load in the relative movement or relative rotation of the shaft member 5 and the hollow cylindrical member 6 is stabilized.

According to this embodiment, since the recessed portions 10 are provided on the projecting portions 4 which extend in the axial direction of the fastener 1, the grease is held in the recessed portion. In particular, in the event that the circumferential edges 4a of the recessed portions 10 are made to tightly stick to the inner circumference of the hollow cylindrical member 6, the grease can be held in the recessed portions 10 in an ensured fashion. Consequently, even though the shaft member 5 and the hollow cylindrical member 6 move relative to each other in the axial direction, the grease applied to the projecting portions 4 at the time of assembly is not scraped out therefrom, whereby the grease held in the recessed portions 10 is supplied to the contact surfaces. By the supply of the grease in that way, the grease is allowed to stay on the contact surfaces between the projecting portions 4 of the fastener 1 and the hollow cylindrical member 6 at all times, whereby the load is stabilized and the production of stick slip happens in no case.

This embodiment is particularly effective when the embodiment is used as the load limiting mechanism when the shaft member 5 and the hollow cylindrical member 6 move relative to each other in the axial directions which is indicated by the arrows X in Fig. 4. In the event that the embodiment is used for the torque limiter mechanism when the shaft member 5 and the hollow cylindrical member 6 move relative to each other in the rotational directions indicated by the arrows Y in Fig. 3, since the grease is applied to the recessed portions 10 in addition to the application of grease in spaces 7, a further stabilized load can be obtained to thereby prevent a stick slip. Note that since the load can be stabilized by applying the grease only to the recessed portions 10 without applying the grease in to the spaces 7, there is provided an advantage that the application amount of grease can be reduced.

Note that while in the first embodiment, the recessed portions 10 provided on the projecting portions 4 of the fastener 1 are described as extending in the axial direction in a thin elongated shape, the invention is not limited thereto. A plurality of recessed portions 10 may be provided on the projecting portion 4. In addition, a plurality of circular recessed portions may be provided on the projecting portion 4 along the axial direction. Additionally, while the recessed portion is preferably surrounded completely by the circumferential edge, the recessed portion does not necessarily have to be surrounded so completely, and hence, the circumferential edge may be cut away partially.

In addition, while in the first embodiment, the projecting portions 4 of the fastener 1 extend in parallel with the axial direction of the ring main body 3, the invention is not limited thereto. The projecting portions 4 may be inclined relative to the axial direction.
In addition, while in the first embodiment, only the group of projections which are made up of the plurality of projecting portions 4 which are provided in the circumferential direction at the regular intervals so as to project radially outwards and extend in the axial direction, the invention is not limited thereto. In the invention, two or more groups of a plurality of projecting portions may be disposed in parallel in the axial direction.

### (Second Embodiment)

While in the first embodiment, the example is illustrated in which the projecting portions 4 of the fastener 1 project radially outwards from the metallic ring main body 3, the invention is not limited thereto, and hence, as shown in Fig. 5, projecting portions 4 may be made to project radially inwards from a metallic ring main body 3. Namely, the projecting portions 4 may be brought into engagement with an outer circumference of a shaft member 5, and the metallic ring main body 3 may be brought into engagement with an inner circumference of a hollow cylindrical member 6. Recessed portions 10 are provided on the projecting portions 4 so that circumferential edges of the recessed portions 10 are made to tightly stick to the shaft member 5, whereby grease can be held in spaces closed by the outer circumference of the shaft member 5 and the recessed portions 10 in an ensured fashion.

### (Third Embodiment)

Fig. 6 is a diagram showing an electric telescopic column which utilizes the fastener 1 of the invention.
The electric telescopic column 20 is made up of a steering wheel 21, a steering shaft 22 to which the steering wheel 21 is fixed, a steering column 24 which supports rotatably the steering shaft 22 via a bearing 23, a supporting body 25 which is fixed to the steering column 24, a drive shaft 26 for moving the supporting body 25 in directions indicated by arrows X, an electric motor 27 for driving the drive shaft 26, and an energy absorbing mechanism (EA mechanism) 28 which joins the supporting body 25 with the drive shaft 26. The EA mechanism 28 has the fastener 1 illustrated in the first embodiment or the second embodiment.

The electric telescopic column 20 extends and contracts the steering column 24 by the drive shaft 26 which is driven by the electric motor 27.
When the electric motor 27 rotates, a worm wheel 30 rotates via a worm 29. A female screw portion 30a is provided on the worm wheel 30. The female screw portion 30a meshes with a male screw portion 26a provided on the drive shaft 26, whereby when the worm wheel 30 rotates, the drive shaft 26 moves in the direction indicated by the arrow X. The drive shaft is joined to the supporting body 25 via the fastener 1. The drive shaft 26 is fixed to the supporting body 25 by virtue of the frictional resisting force of the fastener 1. When the drive shaft moves in the directions indicated by the arrows X, the steering wheel 21 moves in the directions indicated by the arrows X via the steering column 24 which is fixed to the supporting body 25.

When an impact load is inputted thereinto, the EA mechanism 28 absorbs the impact by the fastener 1 sliding in the axial direction indicated by the arrow X. Since there are the grease reservoirs (the recessed portions), when the fastener 1 slides in the axial direction, the grease is supplied to contact surfaces from the grease reservoirs, whereby the load is stabilized. Describing further the function of the EA mechanism 28, when a larger external force which is larger than the frictional resisting force of the fastener 1 acts on the steering wheel 21, the supporting body 25 and the drive shaft 26 move relative to each other in the directions indicated by the arrows X in Fig. 6. As this occurs, the grease held in the recessed portions 10 on the projecting portions 4 of the fastener 1 is supplied to contact surfaces with an inner circumference of the supporting body 25 or contact surfaces with an external surface of the drive shaft, whereby the load in the relative movement between the supporting body 25 and the drive shaft 26 is stabilized. In addition, the occurrence of a stick slip can be prevented.

By utilizing the fastener of the embodiment in the EA mechanism of the steering apparatus, the stable EA load can be produced at the time of collision.

### (Fourth Embodiment)

Fig. 7 is a diagram showing an overall configuration of a vehicle to which the electric telescopic adjustment steering apparatus according to the invention is assembled. Fig. 8 is a diagram showing an overall configuration of a fourth embodiment of the electric telescopic adjustment steering apparatus according to the invention. Fig. 9 is a sectional view taken along the line IX-IX in Fig. 8. Fig. 10 is a sectional view taken along the line X-X in Fig. 9. Fig. 11 is a sectional view of a main part of the invention. Fig. 12 is a sectional view taken along the XII-XII in Fig. 11. Fig. 13 is a sectional view taken along the line XIII-XIII in Fig. 11. Fig. 14 is a similar sectional view to Fig. 11 which shows a contracted state.

In Fig. 7, a steering column apparatus 110 has a steering column 112 which supports rotatably a steering shaft 111. A steering wheel 113 is mounted on the steering shaft 111 at a rear end thereof. An intermediate shaft 115 is connected to a front end of the steering shaft 111 via a universal joint 114. A steering gear 117, which is made up of a rack-and-pinion mechanism or the like, is connected to the intermediate shaft 115 at a front end thereof via a universal joint 116. An output shaft of the steering gear 117 is connected to a steered wheel 119 via a tie rod 118.

Then, when the driver turns the steering wheel 113, the rotating force thereof is transmitted to the steering gear 117 via the steering shaft 111, the universal joint 114, the intermediate shaft 115 and the universal joint 116, and the rotary motion is transformed into a linear motion in a transverse direction of the vehicle in the rack-and-pinion mechanism to thereby turn the steered wheel 119 via the tie rod 118.
In addition, peripheral components P such as a combination switch for driving an electric tilt mechanism 130 and an electric telescopic mechanism 150, which will be described later, a column cover and the like are provided on a rear portion of the steering column 112 which faces the rear of the vehicle.

The steering column apparatus 110 is, as shown in Fig. 11, disposed inclined by a predetermined angle θ so as to be raised upwards towards a rear end thereof relative to a horizontal direction of the vehicle. This steering column apparatus 110 is made up of an outer shaft 111a where the steering wheel 113 is mounted on the steering shaft 111 as shown in Fig. 11 and an inner shaft 111b which is brought into sliding engagement with the outer shaft 111a through a spline connection or a serration connection.

In addition, the steering column 112 is, as shown in Figs. 8, 11 and 16, made up of an outer column 112a and an inner column 112b which is held slidably on the outer column 112a, and the outer shaft 111a of the steering shaft 111 is supported rotatably by rolling bearings 112c, 112d which are provided on an inner circumferential surface of the inner column 112b at front and rear end portions thereof.

A rear end (a left end in Fig. 8) which is the universal joint 114 side of the outer column 112a is supported so as to oscillate freely vertically by a pivot pin 123 on a lower bracket 122 mounted on a vehicle body side member 121, and also, a front end (a right end in Fig. 8) which is the steering wheel 113 side of the outer column 112a is supported so as to move freely vertically on an upper bracket 124 mounted on the vehicle body side member 121.

As shown in Fig. 9, the upper bracket 124 is formed into a square frame shape by a mounting plate portion 124b which has a swelling portion 124a which is caused to swell upwards in a central portion so as to be mounted on the vehicle body side member 121, guide plate portions 124c and 124d which extend downwards from positions lying left and right sides of the swelling portion 124a of the mounting plate portion 124b and a bottom plate portion 124e which connects between lower end portions of the guide plate portions 124c and 124d.
In addition, the outer column 112a is inserted into a guide space 124f which is surrounded by the mounting plate portion 124b, the guide plate portions 124c and 124d and the bottom plate portion 124e. As is clear in Fig. 9, the outer column 112a has protruding portions which protrude horizontally, and guide plate portions 112d, 112e are formed at end portions thereof which have guide faces 112f, respectively, which closely face the guide plate portions 124c and 124d, respectively.

In addition, the guide plate portion 112e is held so as to move vertically by the electric tilt mechanism 130. As shown in Fig. 9, the electric tilt mechanism 130 has a screw shaft 135 which extends vertically along the guide plate portion 124d.
The screw shaft 135is supported rotatably by (1) a rolling bearing 133 which is fixedly disposed by a holding member 132 within a substantially square frame-shaped gear housing 131 formed integrally at a lower end portion of the guide plate portion 124d of the upper bracket 124 and (2) a rolling bearing 134 which is provided on a lower surface of the mounting plate portion 124b of the upper bracket 124.

A worm wheel 136 is mounted on the screw shaft 135 in a position lying in the vicinity of the rolling bearing 133 within the gear housing 131, and a worm 137 is made to mesh with the worm wheel 136. As shown in Fig. 10, this worm 137 is held rotatably by rolling bearings 138 and 139 which are provided within the gear housing 131, and one end of the worm 137 is coupled via a coupling 148 to an output shaft 140a of an electric motor 140 fixed to a mounting plate portion 124g formed on the guide plate portion 124d of the upper bracket 124.

In addition, a cylindrical covering body 141 which covers the screw shaft 135 is provided within a passage hole 131a in the gear housing 131 through which the screw shaft 135 passes, and a lip 142, which is made from a synthetic resin such as polyurethane having large elasticity and is adapted to be brought into slide contact with an outer circumferential surface of the screw shaft 135, is provided at distal end of the cylindrical covering body 141. Similarly, a lip 143, which is adapted to be brought into sliding contact with the outer circumferential surface of the screw shaft 135, is also provided on a lower end face of the rolling bearing 134.

In addition, a nut 145, which is held by a nut holder 144 which has a square cross section, is screwed on the screw shaft 135 between the lips 142 and 143 of the screw shaft 135. A rotary motion of the nut holder 144 on the screw shaft 135 around an axial center thereof is restricted by the nut holder 144 being brought into engagement with an interior of a vertically extending guide groove 146 which is formed on the guide plate portion 124d of the upper bracket 124. The nut holder 144 is moved vertically by the screw shaft 135 rotating clockwise or counterclockwise. An engagement pin 147 which is formed on the nut holder 144 so as to project therefrom is brought into engagement with an elongated hole 124h formed in a distal end of the outer column 112a so as to extend in the axial direction of the outer column 112a.

Consequently, by the worm 137 being rotated clockwise or counterclockwise by the electric motor 140, the screw shaft 135 is driven to rotate clockwise or counterclockwise, whereby the nut holder 144 is moved vertically, and the outer column 112a is oscillated vertically about the pivot pin 123, thereby making it possible to exhibit a tilt function.
Additionally, as shown in Fig. 11, the electric telescopic mechanism 150, which functions as an electric actuator, is provided between the outer column 112a and the inner column 112b of the steering column 112.

This electric telescopic mechanism 150 has, as shown in Fig. 11, a gear housing 151 which is fixed to the steering wheel 113 side of the outer column 112a of the steering column 112. A worm wheel 154 is supported rotatably in the gear housing 151 the by means of rolling bearings 152 and 153 which are disposed so as to spaced apart by a predetermined distance from each other in the axial direction of the steering column 112 while facing each other. This worm wheel 154 is formed into a cylindrical shape having a central large-diameter outer circumferential surface and small-diameter outer circumferential surfaces formed at both end sides of the worm wheel 154 so as to hold the large-diameter circumferential surface therebetween where the rolling bearings 152 and 153 are fitted externally, and a helical gear 154a is formed on the large-diameter outer circumferential surface, while a female screw 154b is formed on an inner circumferential surface thereof.

In addition, as shown in Fig. 12, a worm 156 connected to an output shaft of an electric motor 155 mounted in the gear housing 151 is made to mesh with the helical gear 154a of the worm wheel 154, and the worm wheel 154 and the worm 156 make up a worm speed reduction mechanism. In addition, a connecting rod 158, which will be described later, and the female screw 154b of the worm wheel 154 make up a linear motion mechanism.

On the other hand, a connecting plate 157, which extends in the same direction as the gear housing 151 and which is disposed apart a certain distance from an end face of the outer column 112a, is mounted on the inner column 112b of the steering column 112 in a position lying closer to the steering wheel 113. The connecting rod 158 is provided between the connecting plate 157 and the gear housing 151 in parallel with a center axis of the steering column 112 while keeping a predetermined offset amount L.

The connecting rod 158 is made up of an outer rod 158a which is mounted at a lower end of the connecting plate 157 at one end thereof and an inner rod 158b which is brought into sliding engagement with the other end of the outer rod 158a and a joining portion therebetween is made to be a contracting portion.
A fastener 1 is provided in the joining portion between the outer rod 158a and the inner rod 158b which is adapted to restrict the relative movement between the outer rod 158a and the inner rod 158b while a man power such as applied by the driver is applied during normal driving but to permit the relative motion between the outer rod 158a and the inner rod 158b when an impact load is transmitted to the outer rod 158a via the steering wheel 113, the inner column 112b and the connecting plate 157 at the time of secondary collision.

This fastener 1 has a similar cross-sectional shape as that of the first or second embodiment and has a configuration in which a thin leaf spring material is formed into a ring shape, and a collapsing load which permits the relative movement between the outer rod 158a and the inner rod 158b is set, for example, to about 2kN or more. In addition, a film 158d of, for example, solid lubricant such as a molybdenum disulfide based or fluorine based resin is formed on an outer circumferential surface of the inner rod 158b which is brought into sliding contact with the fastener 1.

In addition, an male screw 158c is formed on the inner rod 158b at an opposite side to a side thereof which faces the outer rod 158a, and the male screw 158c is screwed on the female screw 154b on the worm wheel 154 which is supported rotatably in the gear housing 151, whereby the connecting rod 158 is provided so as to be parallel to the axial direction of the steering column 112.
Consequently, by rotating the electric motor 155 clockwise or counterclockwise, the worm wheel 154 is driven clockwise or counterclockwise via the worm 156. In association with this, the inner rod 158b advances or retreats in the axial direction of the steering column 112, whereby the inner column 112b is driven to extend or contract in the axial direction of the inner column 112b, thereby making it possible to exhibit a telescopic function.

Next, the operation of the fourth embodiment will be descried.
For the driver now to attempt to tilt adjust the steering column 112 of the steering column apparatus 110, the driver operates the combination switch for the tilt mechanism provided as part of the peripheral components P which are provided in the rear portion of the steering column 112 which faces the rear of the vehicle as shown in Fig. 7 in a tilt-up direction (or a tilt-down direction), the electric motor 140 of the electric tilt mechanism 130 is driven to rotate, for example, clockwise (or counterclockwise).

In response to this, by driving to rotate counterclockwise (or clockwise) the screw shaft 135 via the worm wheel 136 via the worm 137, the nut 145 moves upwards (or downwards) as viewed in Fig. 9, whereby since an engagement pin 147 formed on the nut holder 144 is in engagement with an elongated hole 124h formed in the outer column 112a of the steering column 112, the outer column 112a rotates upwards (downwards) about the pivot pin 123, so that a tilt-up (or a tilt-down) adjustment can be implemented.

In addition, For the driver now to attempt to perform a telescopic adjustment of the steering column 112 of the steering column apparatus 110, the driver operates the combination switch for the telescopic mechanism provided as part of the peripheral components P which are provided in the rear portion of the steering column 112 which faces the rear of the vehicle as shown in Fig. 7 in an extending direction (or a contracting direction), the electric motor 155 of the electric telescopic mechanism 150 is driven to rotate, for example, clockwise (or counterclockwise).
By this operation, the worm wheel 154 is driven to rotate clockwise (or counterclockwise) via the worm 156, whereby the inner rod 158b of the connecting rod 158 moves to the steering wheel 113 side (or to the opposite side to the steering wheel 113), and the outer rod 158a moves to the steering wheel 113 side (or the opposite side to the steering wheel 113) via the fastener 1.

Due to this, the inner column 112b is drawn from the outer column 112a via the connecting plate 157 (or the inner column 112b is inserted into the outer column 112a), and the steering column 112 is extended (or contracted) so as to implement the telescopic adjustment.
As this occurs, in association with the movement of the inner column 112b the outer shaft 111a of the steering shaft 111 moves relative to the inner shaft 111b.

In this way, the telescopic adjustment can be implemented by extending or contracting the steering column 112 by the electric telescopic mechanism 150, however, when the connecting rod 158 is moved by the electric motor 155, the fastener 1 ensures the prevention of extension or contraction between the outer rod 158a and the inner rod 158b, so that the outer rod 158a and the inner rod 158b become integral to move the connecting plate 157 forwards or backwards in the longitudinal direction of the vehicle, thereby making it possible to move the inner column 112b forwards or backwards in the longitudinal direction of the vehicle.

However, when an impact load F is applied to the steering wheel 113 in a horizontal direction of the vehicle so as to push it forwards (leftwards as viewed in Fig. 11) due to a secondary collision, firstly, this impact load F is divided into a force component Fx directed towards the column shaft and a force component Fy directed in a direction at right angles to the column shaft. Then, the inner column 112b and the outer shaft 111a are pushed leftwards of the column shaft as viewed in Fig. 11 by the force component Fx directed towards the column shaft, and in response to this, the outer rod 158a of the connecting rod 158 is moved leftwards via the connecting plate 157, whereby the force component Fx directed towards the column shaft is transmitted to the fastener 1. Then, when the force component Fx directed towards the column shaft reaches the set collapsing load, the fastener 1 permits the relative movement between the outer rod 158a and the inner rod 158b, whereby the inner rod 158b is inserted into the outer rod 158a, thereby making it possible to secure a predetermined collapsing stroke as shown in Fig. 14.

When the impact load is applied to the steering wheel 113 so as to move it forwards of the vehicle in this way, until the force component Fx directed towards the column shaft reaches the collapsing load, the sliding resistance between the outer column 112a and the inner column 112b of the steering column 112 is slight, while a slip-free state is maintained between the outer rod 158a and the inner rod 158b of the connecting rod 158 by the fastener 1.

However, the force component Fx directed towards the column shaft which is transmitted to the position of the fastener 1 becomes equal to or more than the collapsing load, due to the relative movement between the outer rod 158a and the inner rod 158b being permitted by the fastener 1, the inner rod 158b is gradually inserted into the outer rod 158a, whereby the connecting rod 158 contracts. As this occurs, since the inner rod 158b is inserted into the outer rod 158a while imparting a predetermined load to the inner rod 158b by the fastener 1, impact energy can be absorbed. As this occurs, since the film 158d of solid lubricant is formed on the outer circumferential surface of the inner rod 158b which is brought into sliding contact with the fastener 1, the film 158d of solid lubricant always exists on the contact surfaces between the fastener 1 and the inner rod 158b in the process in which the inner rod 158b is inserted into the outer rod 158a, thereby making it possible to implement good lubrication between the fastener 1 and the inner rod 158b. Due to this, when the fastener 1 and the inner rod 158b move relative to each other, the load is stabilized, and the occurrence of stick slip can be prevented, thereby making it possible to implement absorption of impact energy in a stable fashion.

On the other hand, the inner column 112b and the outer shaft 111a are caused to deflect slightly upwards by the force component Fy directed in the direction at right angles to the column shaft of the impact load F, and the connecting plate 157 which is rigidly connected to the inner column 112b is also moved together with the inner column 112b while being kept positioned at right angles to the inner column 112b. As a result, although prizing is caused between the outer rod 158a and the inner rod 158b of the connecting rod 158 via the connecting plate 157, since the solid lubricant film 158d is formed on the inner rod 158b, a change in lubricating state by prizing is suppressed, whereby a stable relative movement can be secured while imparting a predetermined load can be secured, thereby making it possible to implement absorption of impact energy in a stable fashion.

Note that while in the embodiments, the situation has been described in which the film 158d of solid lubricant is formed on the inner rod 158b of the connecting rod 158, the invention is not limited thereto, and hence, solid lubricant film may be formed on an inner circumferential surface of the outer rod 158a, or a solid lubricant film may be formed both on the inner circumferential surface of the outer rod 158a and the outer circumferential surface of the inner rod 158b. Furthermore, a solid lubricant film lay be formed on an inner circumferential surface or an outer circumferential surface of the fastener 1.
Alternatively, a solid lubricant film may be formed on at least one of the inner circumferential surface or the outer circumferential surface of the fastener 1 without providing the film on the connecting rod 158 side.

In addition, while in the embodiments, the situation has been described in which the outer column 112a of the steering column 112 is fixed to the vehicle body side member 121, the invention is not limited thereto, and hence, the inner column 112b may be mounted on the vehicle body side member 121 by the lower bracket 122 and the upper bracket 124, while the steering wheel 113 may be mounted on the outer column 112a side.

Furthermore, while in the embodiments, the situation has been described in which the outer rod 158a of the connecting rod 158 is connected directly to the connecting plate 157, the invention is not limited thereto, and hence, the outer rod 158a of the connecting rod and the connecting plate 157 may be connected together via a pivot pin. As this occurs, a bending moment which is generated in the connecting plate 157 to impart prizing to the connecting rod 158 when the force component Fx directed towards the column shaft is applied to the inner column 112b can be prevented from affecting the connecting rod 158 in an ensured fashion, whereby when the force component Fx directed towards the column shaft becomes equal to or more than the collapsing load, the relative movement between the outer rod 158a and the inner rod 158b of the connecting rod 158 can be stabilized further, thereby making it possible to implement better impact energy absorption.

Furthermore, while in the embodiments above, the situation has been described in which the outer rod 158a and the inner rod 158b are connected together by means of the fastener 1 which is formed into the ring shape having the wavy cross section, the invention is not limited to the fastener 1 configured as has been described above, and hence, an arbitrary configuration can be applied to the fastener 1 as long as the configuration can move the outer rod 158a and the inner rod 158b relative to each other when an impact load which is equal to or more than the set collapsing load is transmitted. The fastener 1 may be replaced by the conventional tolerance ring shown in Figs. 17 to 20.

For example, as shown in Fig. 15 which shows a side view of a steering apparatus, a pin 161 made of a synthetic resin may be press fitted in a joining portion between an outer rod 158a and an inner rod 158b of a connecting rod 158 so as to penetrate through both the outer and inner rods, this pin 161 may be made to fail so as to collapse the connecting shaft 158 when a force component Fx directed towards the column shaft becomes equal to or more than the collapsing load due to a secondary collision load. A film 158d of solid lubricant may be formed on an outer circumferential surface of the inner rod 158b of the connecting rod 158 which is brought into sliding contact with the outer rod 158a. Also in this case, when it becomes a situation where the force component Fx directed towards the column shaft becomes equal to or more than the collapsing load and the inner rod 158b is inserted into the interior of the outer rod 158a, the lubricant film 158d is allowed to exist for certain between the outer rod 158a and the inner rod 158b whereby a stable relative movement can be secured while imparting a predetermined load, thereby making it possible to implement better impact energy absorption. In addition, the film of the solid lubricant may be formed on the inner circumferential surface of the outer rod 158a or may be formed on both the inner circumferential surface of the outer rod 158a and the outer circumferential surface of the inner rod 158b.

Furthermore, while in the embodiments, the situation has been described in which the contacting portion made up of the outer rod 158a and the inner rod 158b is formed on the connecting rod 158, the invention is not limited thereto. For example, as shown in Fig. 16 which shows a sectional view of a steering apparatus, a connecting plate 157 is formed into a crank shape by a mounting portion 157a which extends downward from an inner column 112b, an intermediate portion 157b which extends from a lower end of the mounting portion 157a to the front of the vehicle in parallel with a center axis of a steering column 112, and a supporting portion 157c which extends downwards from a front end of the intermediate portion 157b, a passage hole 157d through which a connecting rod 158 passes is formed in the supporting portion 157c, and a fastener 162 having the same configuration as that of the fastener 1 that has been described above is provided within the passage hole 157d and is then fixed by a lock nut 163. On the other hand, the connecting rod 158 is configured such that a small-diameter rod portion 158f and a large-diameter rod portion 158g are formed integral with each other, a male screw is formed on the small-diameter rod portion 158f so as to be screwed in a female screw 154b of a worm wheel 154, and the large-diameter rod portion 158g is passed through the passage hole 157d in the connecting plate 157. Also, in this case, a film 158h of solid lubricant is formed on an outer circumferential surface of the large-diameter rod portion 158g of the connecting rod 158 which is brought into sliding contact with the passage hole 157d of the connecting plate 157.

Then, a force component Fx directed towards the column shaft which results from a secondary impact load to be transmitted to the connecting plate 157 becomes equal to or more than the collapsing load, a relative movement between the connecting rod 158 and the connecting plate 157 is permitted by the fastener 162, whereby the large-diameter rod portion 158g of the connecting rod 158 is inserted into the passage hole 157d of the connecting plate 157, whereby the connecting plate 157 is permitted to move to the front of the vehicle. As this occurs, since the film 158h of solid lubricant exists at all times between the fastener 162 and the large-diameter rod portion 158g of the connecting rod 158, the connecting plate 157 can be moved smoothly while imparting a predetermined load, thereby making it possible to implement stable energy absorption.

Furthermore, while in the embodiments, the situation has been described in which the electric tilt mechanism 130 is included, the invention is not limited thereto, and hence, only the electric telescopic mechanism 150 may be provided with the electric tilt mechanism 130 omitted.

The invention is not such as to be limited to the embodiments that have been described above but can be carried out in various forms without departing from its characteristic matters. Because of this, the embodiments that have been described heretofore constitute the simple illustrations of the invention in every point, and hence, the invention should not be construed as limited thereby. The scope of the invention is to be defined by the claims of the invention and is not such as to be constrained in any case by the contents of the specification. Furthermore, modifications and alterations belonging to the equivalent scope of the claims of the invention should fall within the scope of the invention.

This patent application is based on the Japanese Patent Application (No. P.2006-122827) filed on April 27, 2006 and the Japanese Patent Application (No. P.2006-200907) filed on July 24, 2006, and all the contents thereof are incorporated herein by reference.

## Claims

1. A fastener for joining together two members comprising:
a ring main body;
a plurality of projecting portions provided on the ring main body in a circumferential direction thereof at intervals; and
a recessed portion provided on the projecting portions.

2. The fastener as set forth in Claim 1, wherein
the fastener is mounted between the two members in such a state that the fastener is brought into press contact therewith so as to join the two members coaxially and
the fastener functions as a load limiting mechanism for producing a predetermined load when the two members are moved in an axial direction relative to each other.

3. The fastener as set forth in Claim 1, wherein
the plurality of projections extend along an axial direction of the ring main body, and
a split groove is provided in the ring main body.

4. The fastener as set forth in Claim 1, wherein
a circumferential edge of the recessed portion defines a contact portion which is brought into contact with one of the two members.

5. A steering apparatus comprising:
an energy absorbing mechanism for absorbing impact energy,
wherein the fastener as set forth in Claim 1 is used for the energy absorbing mechanism.

6. An electric telescopic adjustment steering apparatus comprising:
a steering column having an outer column and an inner column which are connected so as to extend and contract freely and adapted to support rotatably a steering shaft on which a steering wheel is mounted; and
an electric actuator mounted on the outer column at one end portion and on the inner column at the other end portion, so as to allow the extension and contraction of the outer column and the inner column, wherein
the electric actuator includes:
the fastener as set forth in Claim 1; and
a contracting portion adapted to absorb impact energy while producing load in an axial direction by contracting when impact load is inputted.

7. The electric telescopic adjustment steering apparatus as set forth in Claim 6, wherein
the electric actuator comprises a rod provided in parallel with a center axis of the inner column with a predetermined offset amount held therebetween and adapted to be driven by an electric motor.

8. The electric telescopic adjustment steering apparatus as set forth in Claim 7, wherein
the rod comprises:
an inner rod which makes up one of the two members;
an outer rod making up the other of the two members into which the inner rod is inserted via a predetermined gap so as to move relatively; and
the fastener fittingly inserted in the gap between the inner rod and the outer rod so as to permit the extension or contraction of the inner rod and the outer rod while imparting a predetermined load when a secondary impact load is applied.

9. The electric telescopic adjustment steering apparatus as set forth in Claim 7, wherein
one end of the rod is screwed to an female screw formed on an inner circumferential surface of a worm wheel of a worm speed reduction mechanism connected to the electric motor and
the other end of the rod is fittingly inserted into a connecting member fixed to either of the outer column and the inner column so as to move relatively while imparting a predetermined load when a secondary impact load is applied.

10. An electric telescopic adjustment steering apparatus comprising:
a steering column comprising an outer column and an inner column which are connected so as to extend and contract freely and adapted to support rotatably a steering shaft on which a steering wheel is mounted; and
an electric actuator mounted on the outer column at one end portion and on the inner column at the other end portion, so as to allow the extension and contraction of the outer column and the inner column, wherein
the electric actuator has a contracting portion adapted to absorb impact energy by contracting while producing load in an axial direction when impact load is inputted, and
a coating of solid lubricant is formed on the contracting portion of the electric actuator.

11. The electric telescopic adjustment steering apparatus as set forth in Claim 10, wherein
the electric actuator comprises:
a rod provided in parallel with a center axis of the inner column with a predetermined offset amount held therebetween and adapted to be driven by an electric motor.

12. The electric telescopic adjustment steering apparatus as set forth in Claim 11, wherein
the rod comprises:
an inner rod;
an outer rod into which the inner rod is inserted via a predetermined gap so as to move relatively; and
an energy absorbing member fittingly inserted in the gap between the inner rod and the outer rod and having wavy irregularities on an inner circumferential surface thereof so as to permit the extension or contraction of the inner rod and the outer rod while imparting a predetermined load when a secondary impact load is applied, and
wherein a film of solid lubricant is formed on a sliding surface of at least one of the inner rod and the outer rod.

13. The electric telescopic adjustment steering apparatus as set forth in Claim 11, wherein
one end of the rod is screwed to an female screw formed on an inner circumferential surface of a worm wheel of a worm speed reduction mechanism connected to the electric motor,
the other end of the rod is fittingly inserted into a connecting member fixed to either of the outer column and the inner column so as to move relatively while imparting a predetermined load when a secondary impact load is applied, and
a film of solid lubricant is formed on a slide contact portion with the connecting member of the rod.
